# EUROPÄISCHE PATENTSCHRIFT

(11) **EP 1 083 358 B1**
(45) Veröffentlichungstag und Bekanntmachung des Hinweises auf die Patenterteilung: **06.10.2004**
(21) Anmeldenummer: 00116100.9
(22) Anmeldetag: 27.07.2000
(51) Int. Cl.: F16D 65/12, F16B 29/00

(54) **Verbindungselement für eine Bremsscheibe**
Connection element for a brake disc
Elément de connexion pour disque de frein

(30) Priorität: 11.09.1999 DE 19943537
(43) Veröffentlichungstag der Anmeldung: 14.03.2001
(73) Patentinhaber: Dr.Ing. h.c.F. Porsche Aktiengesellschaft, 70435 Stuttgart (DE)
(72) Erfinder: Martin, Roland, 71287 Weissach (DE)

(56) Entgegenhaltungen:
- EP-A- 1 013 957
- DE-U- 9 422 141
- DE-U- 29 906 138

## Beschreibung

Die Erfindung betrifft ein Verbindungselement für eine Bremsscheibe.

Für Bremsscheiben ist es bekannt, einen Reibring mit einem Träger zu verbinden. Ein solcher Träger kann ein Bremstopf sein, so daß sich aus Reibring und Bremstopf eine konventionelle Bremsscheibe -ergibt. Ein solcher Träger kann andererseits auch die Radnabe selbst sein. In jedem Fall ist zwischen dem Reibring und dem Träger ein Verbindungselement vorgesehen, das den Reibring mit dem Träger verbindet. Ein Verbindungselement ist z.B. aus DE-U-9 422 141 bekannt. Zur Vermeidung von Wärmespannung ist es ferner bekannt, bei unterschiedlichen Materialien für den Träger und den Reibring ein Verbindungselement vorzusehen, das eine radiale Bewegung zwischen dem Reibring und dem Träger erlaubt. Ein solches Verbindungselement greift in aller Regel in eine radial angeordnete schlitzförmige Ausnehmung am Träger ein, in der ein geeignet geformter Bereich des Verbindungselementes gehalten ist. Nachteilig bei solchen Anordnungen ist, daß mit einer solchen Führung des Verbindungselementes in der schlitzförmigen Ausnehmung stets ein gewisses Spiel verbunden ist, das zu Klappern und zu Korrosionen führen kann.

Ausgehend von diesem Stand der Technik ist es Aufgabe der Erfindung, ein Verbindungselement zu schaffen, das eine gegen Lösen gesicherte Verbindung ermöglicht.

Erfindungsgemäß wird diese Aufgabe mit den Merkmalen des Patentanspruches 1 gelöst. Hierzu wird vorgeschlagen, ein gattungsgemäßes Verbindungselement in seinem von der schlitzförmigen Ausnehmung des Trägers aufgenommenen Kopfbereich mit einem Schlitz zu versehen und das im Kopfbereich vorgesehene Gewinde nur zwischen dem Schlitz und dem dem Schaft abgewandten Endbereich des Kopfes vorzusehen. Durch den quer zu einer Mittelachse des Gewindes angeordneten Schlitz im Kopf des Verbindungselementes ist die Festigkeit des Kopfes in Längsrichtung vermindert, so daß die Zugkraft der Schraube zu einer Verformung des Kopfes führt. Dies wiederum hat eine Klemmung der Schraube im Gewinde zur Folge. In vorteilhafter Weise ist hierdurch ohne Zusatzmittel ein Lösen der Schraube verhindert.

Vorteilhafte Weiterbildungen der Erfindung sind in den Unteransprüchen beschrieben.

Es wird vorgeschlagen, daß sich der im Kopf des Verbindungselementes angeordnete Schlitz über eine Mittelachse des Gewindes hinaus erstreckt. Da die Zugkraft der Schraube entlang ihrer Mittelachse, die mit der Mittelachse des Gewindes übereinstimmt, wirkt, wird durch die gewählte Form des Schlitzes zwischen den durch den Schlitz abgetrennten Stücken des Kopfes ein Moment erzeugt, was zu einer Schrägstellung der beiden Teile des Kopfes zueinander führt. Dies bewirkt eine verbesserte Klemmung des Gewindes und damit eine verbesserte Sicherheit gegen Lösen.

Weiterhin wird vorgeschlagen, daß der Schlitz im Kopf des Verbindungselementes quer zur Richtung der Längserstreckung der schlitzförmigen Ausnehmung des Trägers angeordnet sein soll. Bei dieser Lage des Schlitzes in Relation zu der schlitzförmigen Ausnehmung ist eine symmetrische Verformung und damit eine gleichmäßige Klemmung zu beiden Seiten der schlitzförmigen Ausnehmung im Träger gewährleistet. Dies trägt zu einer gleichmäßigen Krafteinleitung und damit zu einem reproduzierbaren Gleitverhalten des Verbindungselementes in der schlitzförmigen Ausnehmung des Trägers bei.

Weiter wird vorgeschlagen, daß der Kopf aus zwei scheibenförmigen oder plattenförmigen Bereichen besteht, zwischen denen abgesetzt ein zur schlitzförmigen Ausnehmung des Trägers korrespondierender Bereich angeordnet ist, der vorzugsweise zumindest seitlich abgeflacht ist. Diese Form des Kopfes hat sich, beispielsweise in Form eines Vierkantes zwischen zwei Scheiben, bewährt und trägt damit zu einer sicheren Aufnahme des Kopfes in der schlitzförmigen Ausnehmung des Trägers bei. Die Abflachungen müssen jedoch nur dort vorgesehen sein, wo sie zur Aufnahme in die schlitzförmige Ausnehmung notwendig sind. Schließlich kann auch eines oder mehrere der plattenförmigen Elemente einseitig abgeflacht sein. Bei knappen Bauraum trägt dies dazu bei, daß das Verbindungselement in radialer Richtung möglichst weit innen am Träger angeordnet werden kann, so daß bei zumeist vorgegebenem Außendurchmesser des Reibringes dessen Fläche nach innen so groß wie möglich gehalten werden kann.

Die Erfindung ist nachstehend anhand des in den Figuren dargestellten Ausführungsbeispieles näher erläutert. Es zeigen:
- Fig. 1: einen Schnitt durch eine zweiteilige Bremseinrichtung mit einem erfindungsgemäßen Verbindungselement,
- Fig. 2: eine Ansicht des Verbindungselementes als Einzelteil,
- Fig. 3: einen Schnitt nach der Linie A-A der Fig. 2, und
- Fig. 4: einen Schnitt nach der Linie B-B der Fig. 3

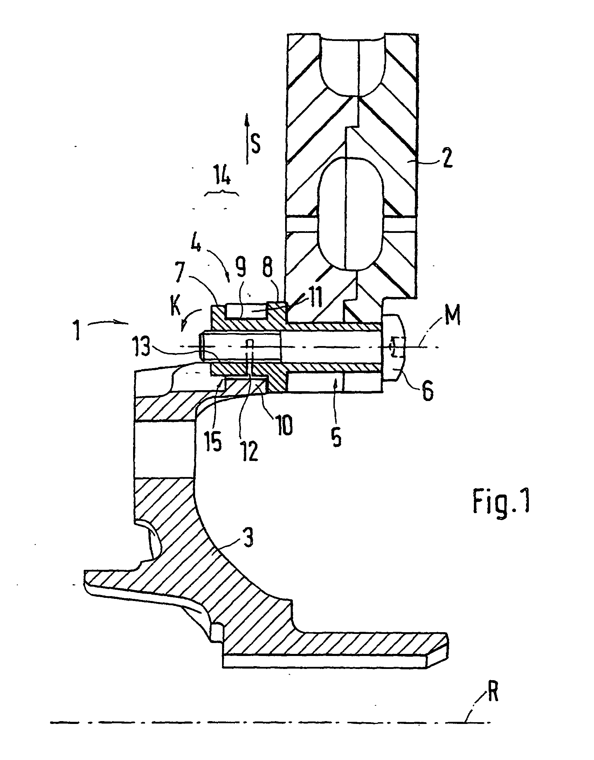

Wie in Fig. 1 gezeigt ist das Verbindungselement 1 zwischen einem Reibring 2 und einem Träger 3, hier einer Radnabe, angeordnet und hält den Reibring 2 auf der Radnabe 3, die zusammen eine Bremseinrichtung bilden. Das Verbindungselement 1 besteht aus einem Kopf 4 und einem hülsenförmigen Schaft 5, durch den eine Schraube 6 geführt ist. Die Schraube 6 stützt sich am Schaft 5 und nicht am Reibring 2 ab, so daß die Vorspannkraft der Schraube im wesentlichen über den Schaft 5 und nicht über den Reibring 2 geleitet wird. Die Länge des Schaftes 5 ist hierbei so gemessen, daß der Reibring 2 spielfrei gehalten ist.

Der Kopf 4 besteht aus zwei scheibenförmigen Bereichen 7, 8, zwischen denen ein abgesetzter Bereich 9 vorgesehen ist. Der abgesetzte Bereich 9 ist im vorliegenden Beispiel als Vierkant ausgeführt. In einem Außenbereich 10 der Radnabe sind schlitzförmige Ausnehmungen 11 angeordnet, die sich in radialer Richtung zu einer Radachse R erstrecken. Die lichte Weite dieser Ausnehmungen 11 entspricht - der Breite des abgesetzten Bereiches 9. Die Dicke des Randbereiches 10 entspricht der Länge des abgesetzten Bereiches 9, so daß der Kopf 4 des Verbindungselementes 1 mit geringem Spiel am Randbereich 10 gehalten ist.

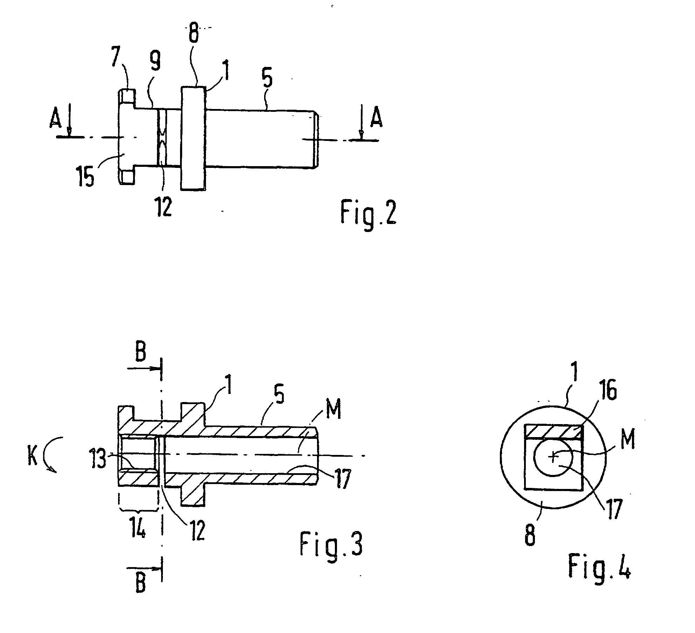

In etwa der Mitte des abgesetzten Bereiches 9 ist in den Kopf 4 ein Schlitz 12 eingebracht, der sich über eine Mittelachse M der Schraube 6 hinaus erstreckt. In einem Bereich 14 des Kopfes 4, der sich ausgehend von dem Schlitz 12 vom Schaft 5 weg erstreckt, ist ein Gewinde 13 vorgesehen, in das die Schraube 6 eingreift. Ein Innendurchmesser des verbleibenden Bereiches des Kopfes 4 sowie des Schaftes 5 ist als Durchgangsbohrung 17 (vgl. Fig. 3) für die Schraube 6 ausgeführt.

Die scheibenförmigen Bereiche 7, 8 übergreifen seitliche Ränder der Ausnehmung 11. Der im Bereich 14 des Kopfes 4 angeordnete scheibenförmige Bereich 7 weist an seiner Unterseite eine Abflachung 15 auf.

Dadurch, daß der Schlitz 12 über die Mittelachse M hinausreicht, wird nach Anziehen der Schraube 6 auf den Bereich 14 des Kopfes 4 ein Kippmoment in Pfeilrichtung K ausgeübt und der Bereich 14 wird gegenüber dem Rest des Verbindungselementes 1 gekippt. Die in der Durchgangsbohrung 17 geführte Schraube 6 kann nicht mitkippen, so daß der Bereich 14 und das in ihm angebrachte Gewinde 13 gegen die Schraube 6 gekippt werden. Dies führt zu einem Verklemmen der Schraube 6 im Gewinde 13 und damit zu einer Sicherung der Schraube 6 gegen Lösen.

Der Schlitz 12 ist hierbei quer zur Richtung einer Längserstreckung S der schlitzförmigen Ausnehmung 11 angeordnet. Damit ergibt sich auch beim Kippen des Bereiches 14 eine symmetrische Kraftverteilung zu beiden Seiten der schlitzförmigen Ausnehmung 11, wenn es hier durch die Verformung zu einer Klemmung am Randbereich 10 kommt.

Fig. 2 zeigt das Verbindungselement 1 ohne die Schraube 6 als Einzelteil. Dargestellt ist die Ansicht von unten gemäß Fig. 1, d.h. mit Blickrichtung auf den Schlitz 12. Fig. 3 zeigt nochmals einen Schnitt durch das Verbindungselement 1 in derselben Lage wie in Fig. 1, jedoch wiederum ohne die Schraube 6. Hier ist deutlich zu erkennen, daß das Gewinde nur im Bereich 14 eingebracht ist. Fig. 4 zeigt einen Schnitt durch den Schlitz 12. Ein verbleibender Restquerschnitt 16 wirkt als Gelenk und sorgt dafür, daß sich der Bereich 14 ohne merkliche innere Verformung unter dem Einfluß des von der Schraube 6 aufgebrachten Kippmomentes in Pfeilrichtung K kippen kann.

## Patentansprüche

1. Verbindungselement für eine Bremsscheibe, wobei das Verbindungselement (1) einen Kopf (4) mit einem Bereich (9) zur Aufnahme in einer schlitzförmigen Ausnehmung (11) eines Trägers (3) und einem hülsenförmigen Schaft (5), wobei am Kopf (4) ein Gewinde (13) zur Aufnahme einer den Schaft (5) durchdringenden Schraube (6) vorgesehen ist, **dadurch gekennzeichnet, daß** der Kopf (4) in dem Bereich (9) zur Aufnahme in einer schlitzförmigen Ausnehmung (11) einen Schlitz (12) aufweist und das Gewinde (13) nur zwischen dem Schlitz (12) und dem dem Schaft (5) abgewandten Endbereich (14) des Kopfes vorgesehen ist.

2. Verbindungselement nach Anspruch 1, **dadurch gekennzeichnet, daß** sich der Schlitz (12) über eine Mittelachse (M) des Gewindes (13) hinauserstreckt.

3. Verbindungselement nach Anspruch 1 oder 2, **dadurch gekennzeichnet, daß** der Schlitz (12) quer zur Richtung einer Längserstreckung (S) der schlitzförmigen Ausnehmung (11) des Trägers (3) angeordnet ist.

4. Verbindungselement nach Anspruch 1, 2 oder 3, **dadurch gekennzeichnet, daß** der Kopf (4) aus zwei scheibenförmigen oder plattenförmigen Bereichen (7, 8) besteht, zwischen denen abgesetzt ein zur schlitzförmigen Ausnehmung des Trägers korrespondierender, vorzugsweise zumindest seitlich abgeflachter Bereich (9) angeordnet ist.

5. Verbindungselement nach Anspruch 4, **dadurch gekennzeichnet, daß** zumindest einer der plattenförmigen Bereiche (7, 8) an zumindest einer in Richtung der Längserstreckung (S) der schlitzförmigen Ausnehmung (11) des Trägers liegenden Seite abgeflacht ist.

## Claims

1. A connecting element for a brake disc, wherein the connecting element (1) has a head (4) with a region (9) for reception in a slot-shaped recess (11) in a support (3) and a sleeve-shaped shaft (5), wherein a thread (13) for receiving a screw (6) passing through the shaft (5) is provided on the head (4), **characterized in that** in the region (9) for reception in a slot-shaped recess (11) the head (4) has a slot (12), and the thread (13) is provided only between the slot (12) and the end region (14) of the head remote from the shaft (5).

2. A connecting element according to Claim 1, **characterized in that** the slot (12) extends beyond a central axis (**M**) of the thread (13).

3. A connecting element according to Claim 1 or 2, **characterized in that** the slot (12) is arranged transversely to the direction of a longitudinal extension (S) of the slot-shaped recess (11) of the support (3).

4. A connecting element according to Claim 1, 2 or 3, **characterized in that** the head (4) comprises two disc-shaped or plate-shaped regions (7, 8), between which a region (9) corresponding to the slot-shaped recess (11) in the support and preferably flattened at least laterally is arranged in an offset manner.

5. A connecting element according to Claim 1, **characterized in that** at least one of the plate-shaped regions (7, 8) is flattened on at least one side situated in the direction of the longitudinal extension (S) of the slot-shaped recess (11) in the support.

## Revendications

1. Elément de liaison pour un disque de frein, dans lequel l'élément de liaison (1) présente une tête (4) avec une zone (9) pour l'admission dans une entaille en forme de fente (11) d'un support (3) et avec une tige en forme de manchon (5) dans laquelle un filetage (13) est prévu sur la tête (4) pour l'admission d'une vis (6) traversant la tige (5), **caractérisé en ce que** la tête (4) présente une fente (12) dans la zone (9) pour l'admission dans une entaille en forme de fente (11) et le filetage (13) n'est prévu qu'entre la fente (12) et la zone d'extrémité (14) de la tête (4) tournée vers la tige (5).

2. Elément de liaison selon la revendication 1, **caractérisé en ce que** la fente (12) s'étend vers l'extérieur par-dessus un axe médian (M) du filetage (13).

3. Elément de liaison selon la revendication 1 ou 2, **caractérisé en ce que** la fente (12) est disposée transversalement en direction d'une prolongation longitudinale (S) de l'entaille en forme de fente (11) du support (3).

4. Elément de liaison selon la revendication 1, 2 ou 3, **caractérisé en ce que** la tête (4) se compose de deux zones en forme de disques ou de plaques (7, 8) entre lesquelles une zone correspondante (9) aplatie de préférence au moins latéralement, est disposée décalée vers l'entaille en forme de fente du support.

5. Elément de liaison selon la revendication 4, **caractérisé en ce qu'**au moins une des zones en forme de plaques (7, 8) est aplatie sur au moins un des côtés orientés en direction de la prolongation longitudinale (S) de l'entaille en forme de fente (11) du support.
